Europäisches Patentamt

European Patent Office

Office européen des brevets

(19)

(11) Publication number: **0 107 359**
A2

(12) **EUROPEAN PATENT APPLICATION**

(21) Application number: 83305693.0

(51) Int. Cl.³: **H 02 H 3/08**, H 02 H 9/02

(22) Date of filing: 23.09.83

(30) Priority: 25.09.82 JP 168061/82

(71) Applicant: **MITSUBISHI DENKI KABUSHIKI KAISHA, 2-3, Marunouchi 2-chome Chiyoda-ku, Tokyo 100 (JP)**

(72) Inventor: **Arimoto, Satomi, 17-12-215, Mondoso, City of Nishinomiya Hyogo Prefecture (JP)**
Inventor: **Hirakawa, Hiroyuki, 4-23-3, Segawa, City of Minoo Osaka-Fu (JP)**
Inventor: **Maekawa, Hiroshi, 21-C203, Kashikiri-yama, City of Suita Osaka-Fu (JP)**

(74) Representative: **Lawson, David Glynne et al, MARKS & CLERK 57-60 Lincoln's Inn Fields, London WC2A 3LS (GB)**

(43) Date of publication of application: 02.05.84
Bulletin 84/18

(84) Designated Contracting States: DE FR GB

(54) Alternating current limiting type semiconductor current circuit breaker.

(57) An alternating current limiting type semiconductor current circuit breaker for a transmission or distribution line system comprises: a first circuit formed of a transformer or reactor (1) and a capacitor or capacitors (2, 20) which provide a series resonant circuit during steady-state operation of the line system, a second circuit connected in series with the secondary winding side of the transformer and formed by a resistor (4) and a nonlinear resistance element (30), a third circuit connected in parallel with said first circuit and formed by a series connection of a reactor (5) and resistor (6), and a semiconductor switchin device (7) connected in series with the parallel connection of said first and third circuits. The nonlinear solid-state resistance element (30) is a zinc oxide nonlinear type resistance element the resistance of which is lowered upon occurrence of an earth fault or the like to provide for an increase in the combined impedance of the parallel connection of said first and third circuits for limiting the overcurrent flowing through the current circuit breaker.

## ALTERNATING CURRENT LIMITING TYPE
## SEMICONDUCTOR CURRENT CIRCUIT BREAKER

### BACKGROUND OF THE INVENTION

This invention relates to an alternating current limiting type semiconductor current circuit breaker for a transmission or distribution line system, wherein the transient fault current generated in the line system in case of grounding, shorting or the like type of fault is suppressed or limited prior to interruption of the fault current for removal of the fault condition.

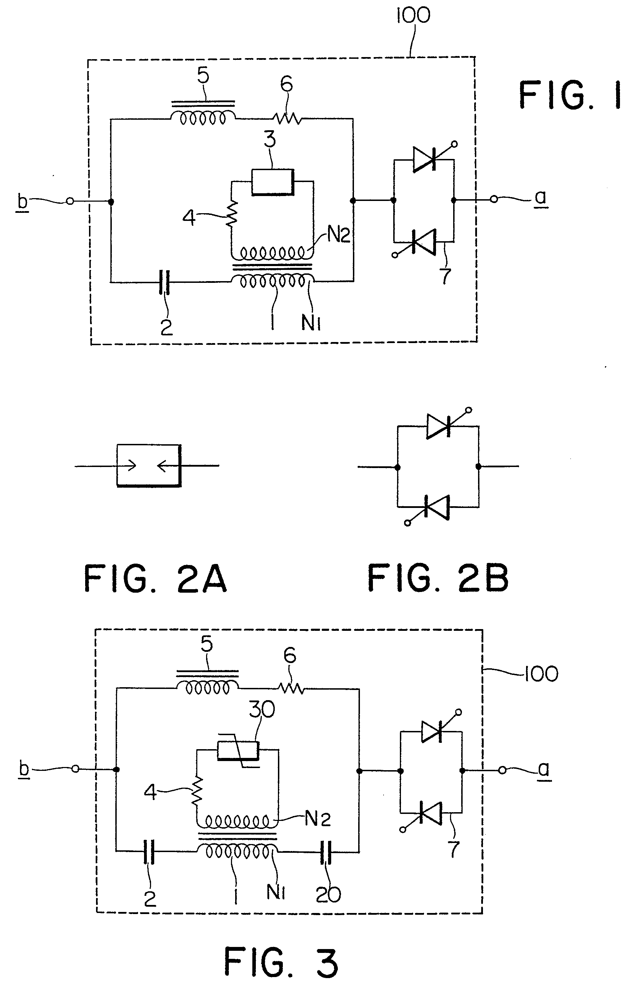

Fig. 1 shows a circuit system so far proposed for this kind of alternating current limiting type circuit breaker. In the drawing, only one phase of the transmission line is shown. Numeral 1 designates a transformer and numeral 2 a capacitor connected in series with the primary winding $N_1$ of the transformer 1, and constitutes a first circuit. Numeral 5 designates a reactor and numeral 6 a resistor connected in series with the reactor 5. The resistor 6 and reactor 5 constitute a third circuit which is in parallel with the first circuit. Numeral 3 designates a switching device such as a gap shown in Fig. 2A or a thyristor or the like semiconductor switch shown in Fig. 2B. Numeral 4 designates a resistor connected in series with the switching device 3 and in conjunction with the switching device 3 constitutes a second circuit which is connected in series with a secondary winding $N_2$ of the transformer 1. The overall current circuit breaker is formed by a parallel connection of the first circuit and the third circuit, and a semiconductor second switching device 7 connected in series therewith.

The current breaker shown in Fig. 1 operates as follows. During steady state (normal) operation of the transmission system, the voltage across the secondary winding $N_2$ of the transformer 1 is low so that the switching device 3 remains in a deactivated state and hence the secondary side of the transformer 1 is open-circuited. The transformer 1 and the capacitor 2 make up a series resonant circuit at the A.C. frequency of the transmission line or distribution line. Accordingly, the parallel connection of the first and second circuits provides a connection path of approximately zero impedance between points $\underline{a}$ and $\underline{b}$ of the transmission or distribution line.

In case of a fault such as a short or grounding along the transmission line, a large transient current starts to flow through the circuit, and the voltage induced across the secondary winding $N_2$ of the transformer 1 increases rapidly. Thus, when the switching device 3 is a gap, a discharge automatically occurs instantly across the gap. When the switching device is a thyristor switch, the second circuit is closed by external controlling means. Therefore, in either case, the switching device 3 is turned on which closes the second circuit of the transformer composed of the secondary winding $N_2$ and the resistor 4. Thus the impedance as viewed from the primary winding $N_1$ of the transformer 1 is zero. Consequently, the series circuit of the transformer 1 and the capacitor 2 is no longer in series resonance.  At this time, the capacitor 2 and the reactor 5 which is a part of the third circuit are in parallel resonance so that the overall impedance of a parallel connection of the first and third circuits is increased.  In this manner, the large transient current flowing through points <u>a</u>, <u>b</u> of the transmission line system is suppressed and limited to approximately several times the steady-state current. Finally, the switching device 7 formed by thyristors or the like semiconductor elements is turned off for disconnecting the transmission line system.

In the above constuction of the alternating current limiting type semiconductor current cirucit breaker, when the switching device 3 is a gap, the arc, once started across the gap, must be suppressed after removal of the fault  condition.  Thus it necessitates some time before the operating state that existed prior to the occurrence of the accident is restored.  Moreover, the operations of maintenance and inspection are required, while the discharge properties of the switching device may change due to consumption of electric power by the discharge electrodes thereof.  When the switching device is of the semiconductor type switch, control input singnals need be supplied from outside, thus unnecessarily complicating the circuit design.

## SUMMARY OF THE INVENTION

The principal object of the present invention is to provide a highly reliable alternating current limiting type semiconductor current circuit breaker in which the switching device 3 in Fig. 1 conventionally formed by

0107359

a gap or a semiconductor switch is replaced by a zinc oxide type nonlinear resistance element, whereby the overcurrent may be suppressed at high speed without resorting to outside control and whereby the device may be restored automatically to its normal operating state after interruption of the accident condition of the transmission or distribution line system.

Basically, the current breaker of the present invention has a first circuit comprized of a transformer and a capacitor, a second circuit comprized of a first resistor and a zinc oxide type nonlinear resistance element, said resistor and said element being connected in series with the secondary side of the transformer, a third circuit in parallel with said first circuit and comprized of a reactor and a second resistor, and a semiconductor second switching device connected in series with the parallel connection of said first and third circuits. The zinc oxide type resistance element may be increased in resistance when the large transient current starts to flow through the current circuit breaker so that the breaker operates to suppress the transient current to several times the steady state current. The nonlinear resistance element is restored automatically to its normal resistance upon elimination of the  fault  condition to permit the breaker to act as a simple transmission link of substantially zero combined impedance.

- 5 -

0107359

BRIEF DESCRIPTION OF THE DRAWINGS

Fig. 1 is a diagrammatic circuit diagram showing essential portions of the alternating current limiting type semiconductor current circuit breaker according to the prior art;

Figs. 2A and 2B are diagrammatic views showing two types of a switching device employed in the circuit of Fig. 1;

Fig. 3 is a diagrammatic circuit diagram showing essential portions of the alternating current limiting type semiconductor current circuit breaker according to a preferred embodiment of the present invention;

Fig. 4 shows the current, voltage and magnetic flux waveforms for explaining the present invention; and

Figs. 5A and 5B are partial circuit diagrams showing modified embodiments of the present invention.

DESCRIPTION OF PREFERRED EMBODIMENTS

A preferred embodiment of the present invention is now described by referring to Fig. 3 in which the same parts as those shown in Fig. 1 are depicted by the same reference numerals. In this figure, numeral 30 designates a switching device consisting essentially of a zinc oxide nonlinear type resistance element and numeral 20 a capacitor placed symmetrically to the capacitor 2 with respect to the transformer 1.

The current circuit breaker of the present embodiment operates as follows.

0107359

Referring to Fig. 3, during the steady-state operation of the transmission line system, only a low voltage is induced across the secondary winding $N_2$ of the transformer 1. The result is that the resistance of the nonlinear resistor 30 is high and thus the secondary side of the transformer 1 is substantially open-circuited, whereby the transformer 1 and the capacitors 2, 20 are then in series resonance at the A.C. frequency of the transmission line system. At this time, the parallel connection of the first and third circuits acts as a transmission link of substantially zero combined impedance to provide for normal or steady-state operation of the transmission line system.

When a fault such as an earth fault or short circuit has occurred in the line system, a large transient current flows through the line so that the voltage across the secondary winding $N_2$ of the transformer 1 is suddenly increased. The result is that the resistance of the zinc oxide nonlinear type resistance element 30 is lowered to complete a circuit comprized of the secondary winding $N_2$ of the transformer 1 and the resistor 4, whereby the impedance of the secondary side circuit with respect to the primary side of the transformer 1 becomes substantially zero. The series connection of the primary winding $N_1$ and the capacitors 2, 20 is no longer in series resonance. Instead, the capacitor 2 and the reactor 5 of the third circuit are brought into parallel resonance at the A.C. frequency of the transmission line system. The result is that the combined impedance of the overall circuit comprized of the first and third circuits is increased to limit or suppress the overcurrent through the transmission line system by several times the steady-state current. Finally the second switching device comprized of the semiconductor elements such as thyristors is turned off for current interruption. Upon removal of the fault condition, the resistance of the zinc oxide type nonlinear resistance element 30 increases so that the second circuit is automatically returned to the substantially open-circuited condition.

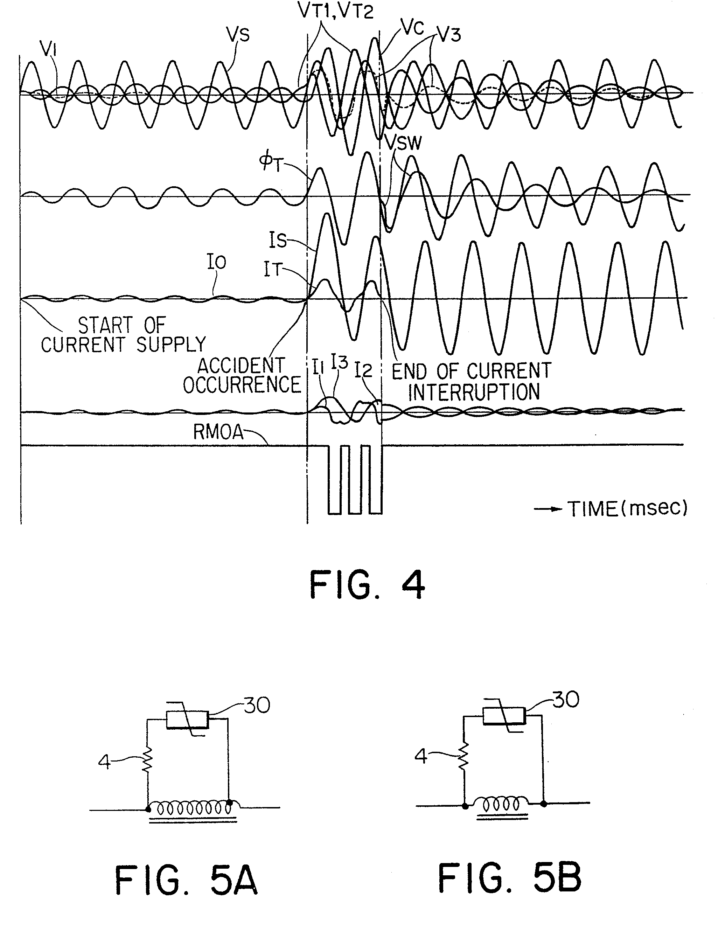

Fig. 4 shows the results of a test in which the transient state brought about upon interruption of a fault current flowing through a transmission line system provided with the alternating current limiting type semiconductor circuit breaker device of the present invention is simulated with the aid of an electronic computer. In the drawing, $V_S$ designates the voltage waveform of the line system source. $V_{T1}$, $V_{T2}$ designate voltage waveforms across the primary and secondary windings of the teansformer 1, respectively. $V_C$ designates the combined voltage waveforms of the capacitors 2, 20. $V_1$ designates the combined voltage waveforms across the first circuit. $V_3$ designates the combined voltage waveform across the third circuit. $V_{SW}$ designates the voltage waveform across the terminals of the semiconductor second switching device such as a thyristor switch. $\phi_T$ designates the waveform of the magnetic flux through the iron core of the transformer 1. $I_0$ designates the waveform of the steady-state current. $I_S$ designates the waveform of the shorting fault current

- 8 -

0107359

in the absence of the circuit breaker device 100. $I_T$ designates the waveform of the limited or suppressed current with the breaker 100 introduced into the line system. $I_1$, $I_2$ and $I_3$ designate the waveforms of the currents flowing through the first, second and third circuits of the breaker 100, respectively. $R_{MOA}$ designates changes caused in the resistance of the resistance element 30.

From the foregoing, it is seen that the arrangement of the current circuit breaker in which the current limiting or suppressing portion is comprized of series and parallel resonant circuits of a reactor or capacitor in combination with a zinc oxide nonlinear type resistance element makes it possible to do without additional control operations and controlling means during faults so required in the prior-art device. Moreover, the arrangement of the present invention provides a highly reliable current circuit breaker for a power transmission system which is of a simple circuit design and which has extremely fast response characteristics to the occurrence of faults, and which is capable of limiting the overcurrent caused by the fault condition and being promptly and automatically returned to the normal operating state after the removal of the fault condition.

It should be noted that the present invention is not limited to the foregoing arrangement but may be applied to cases in which the transformer 1 is an autotransformer or a reactor as shown in Fig. 5A and Fig. 5B. In addition, the transformer, reactor, capacitors, resistor, zinc oxide nonlinear type resistance element and the semiconductor second switching device may be housed in their entirety or per phase in a casing having sealed therein a $SF_6$ gas or the like cooling or insulating medium.  Further, capacitors 2, 20 may be connected in series on only one side of the transformer 1 in case the sum of the respective terminal voltage is low.

M&C FOLIO: 799P46396                    WANGDOC: 0119d

CLAIMS:

1. An alternating current-limiting type semiconductor current circuit breaker for a transmission or distribution line system comprising:

a first circuit form of an inductive device (1) and a capacitor (2), said capacitor being connected in series with the primary winding side (N1) of said transformer, whereby said transformer and said capacitor provide a series resonant circuit during steady-state operation of the line system;

a second circuit connected in series with a secondary side (N2) of said inductive device (1) and formed by a first resistor (4) and a switching device (3) connected in series;

a third circuit connected in parallel with said first circuit and formed by a series connection of a reactor (5) and a second resistor (6); and

a semiconductor switching device (7) connected in series with the parallel connection of said first and third circuits, characterised in that the switching device in the second circuit is a non-linear solid-state resistance (30).

2.   The current circuit breaker claimed in claim 1, characterised in that said nonlinear solid-state resistance (30) is a zinc oxide nonlinear type resistance element.

3.   The current circuit breaker claimed in claim 1 or 2 characterised in that said inductive device (1) is an autotransformer.

4.   The current circuit breaker claimed in claim 1 or 2 characterised in that said inductive device (1) is a reactor.

5.   The current circuit breaker claimed in claim 1 or 2 characterised in that the inductive device (1) is a transformer.

6.   The current circuit breaker claimed in any preceding claim characterised in that said capacitor (2, 20) and said inductive device (1) form a resonant circuit during non steady-state operation of the line system so as to increase the impedance of said third circuit.

7.   The current circuit breaker claimed in any preceding claim characterised in that two capacitors (2, 20) are connected in series with the inductive device (1) in the first circuit.

0107359

FIG. 1

FIG. 2A

FIG. 2B

FIG. 3

0107359

2-2

FIG. 4

FIG. 5A

FIG. 5B